Europäisches Patentamt

**European Patent Office**

Office européen des brevets

(19)

(11) Veröffentlichungsnummer: **0 088 144**
A1

(12) **EUROPÄISCHE PATENTANMELDUNG**

(21) Anmeldenummer: **82102761.2**

(22) Anmeldetag: **01.04.82**

(51) Int. Cl.³: **F 16 K 1/38, F 16 K 3/12**

(30) Priorität: **10.03.82 CH 1460/82**

(71) Anmelder: **GEBRÜDER SULZER AKTIENGESELLSCHAFT, Zürcherstrasse 9, CH-8401 Winterthur (CH)**

(43) Veröffentlichungstag der Anmeldung: **14.09.83 Patentblatt 83/37**

(72) Erfinder: **Tiefenthaler, Edelbert, Schützenhausstrasse, CH-8353 Elgg (CH)**

(74) Vertreter: **Dipl.-Ing. H. Marsch Dipl.-Ing. K. Sparing Dipl.-Phys.Dr. W.H. Röhl Patentanwälte, Rethelstrasse 123, D-4000 Düsseldorf (DE)**

(84) Benannte Vertragsstaaten: **AT BE CH DE FR GB IT LI LU NL SE**

(54) **Abschlussventil.**

(57) Das Abschlußventil weist ein Ventilgehäuse (1) mit zwei einander gegenüber angeordneten Anschlußöffnungen (2, 3) und mit zwei diesen Anschlußöffnungen (2, 3) zugeordneten Sitzflächen (14) im Innern des Ventilgehäuses auf. Im Ventilgehäuse (1) befindet sich ein quer zu den Achsen der Anschlußöffnungen (2, 3) verschiebbarer und mit den beiden Sitzflächen (14) zusammenwirkender Schieber (18), der mit einer Ventilspindel (16) verbunden ist. Der Schieber (18) ist in seinem mit den Sitzflächen (14) zusammenwirkenden Bereich (22) konisch ausgebildet und ebenso die Sitzflächen (14) im Ventilgehäuse (1), so daß diese – bei geschlossenem Ventil – mit dem konischen Bereich (22) des Schiebers (18) zur Deckung kommen.

Durch die konische Formgebung des Schiebers und der Sitzflächen wird die Herstellung des Ventils vereinfacht und zugleich eine hohe Dichtheit erreicht.

0088144

P.5701 Stph

Gebrüder Sulzer Aktiengesellschaft, Winterthur, Schweiz

## Abschlussventil

Die Erfindung betrifft ein Abschlussventil nach dem Oberbegriff des Patentanspruchs 1. Abschlussventile dieser Art
sind z.B. aus der DE-AS 24 03 825 bekannt. Sie werden im
allgemeinen nur für Ventilquerschnitte mit mehr als 50mm
Durchmesser verwendet. Werden sie kleiner ausgeführt, so
tritt der Nachteil auf, dass die Bearbeitung der Ventilsitze im eingebauten Zustand wegen der ungünstigen Platzverhältnisse unverhältnismässig aufwendig ist.

Es ist Aufgabe der Erfindung, bei solchen kleinen Abschlussventilen die Herstellung zu vereinfachen und die
Herstellungskosten zu senken.

Diese Aufgabe wird erfindungsgemäss durch die Merkmale
nach dem Kennzeichen des Anspruchs 1 gelöst. Die konischen
Sitzflächen lassen sich - obschon sie sich in einer Längsbohrung des Ventilgehäuses befinden - verhältnismässig
leicht und genau und ohne hohen Zeitaufwand schleifen,
läppen und gegen den Konusbereich des Schiebers einschleifen, sodass ausser geringeren Herstellungskosten auch eine hohe Dichtheit erreicht wird.

Die Gestaltung nach Anspruch 2 bringt den Vorteil, dass der Schieber seitlich gut abgestützt wird, sodass er nicht in seitliche Schwingungen geraten kann. Dadurch wird ein Ausschlagen der Stopfbüchse verhindert.

Die Rücksitzdichtung gemäss Anspruch 3 verhindert ein Auftreten von Leckage durch die Stopfbüchse hindurch, wenn das Ventil sich in offenem Zustand befindet.

Schliesslich wird durch Anordnen eines Zapfens nach Anspruch 4 bei geöffnetem Ventil der Druckabfall erheblich verkleinert.

Zwei Ausführungsbeispiele der Erfindung werden nun anhand der Zeichnung näher erläutert. Es zeigen:

Fig. 1    einen Längsschnitt durch ein erfindungsgemässes Abschlussventil in geschlossener Stellung,

Fig. 2    einen Längsschnitt durch einen Teil eines gegenüber Fig. 1 abgewandelten Ventils in offener Stellung.

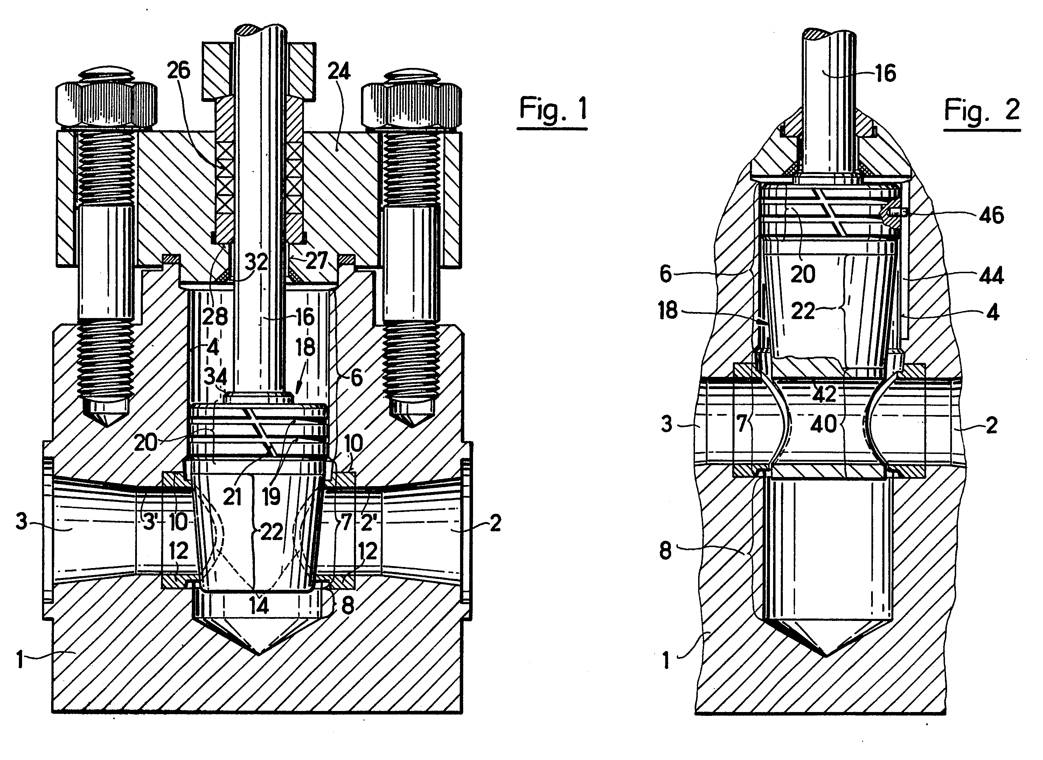

Gemäss Fig. 1 weist ein Ventilgehäuse 1 zwei Anschlussöffnungen 2 und 3 auf, die koaxial angeordnet sind und als gegen das Innere des Gehäuses sich verjüngende Bohrungen ausgebildet sind, an die sich je eine zylindrische Bohrung 2' bzw. 3' anschliesst. Rechtwinklig zu den beiden Anschlussöffnungen 2 und 3 verläuft im Ventilgehäuse 1 eine Zentralbohrung 4, die drei Abschnitte 6,7 und 8 aufweist. Der lange, in Fig. 1 obere Abschnitt 6 ist kreiszylindrisch, der darunter liegende Abschnitt 7 konisch und der unterste Abschnitt 8 wiederum kreiszylindrisch ausgebildet. An der Mündung der Bohrungen 2' und 3' in die Zentralbohrung 4 ist im Ventilgehäuse 1 je eine Ausdrehung 10 vorgesehen. In jede Ausdrehung 10 ist ein ringförmiger Ventilsitz 12 eingefügt, dessen Innendurchmesser gleich dem Durchmesser der Bohrung 2' bzw. 3' ist. Die Dichtflächen 14 dieser Ventilsitze 12 verlaufen parallel zum konischen Abschnitt 7 der Zentralbohrung 4.

In der Zentralbohrung 4 ist ein mit einer Ventilspindel 16 fest verbundener Schieber 18 axial verschiebbar gelagert. Er weist einen mit zwei Ringnuten 19 und einer Schrägnut 21 versehenen, kreiszylindrischen Abschnitt 20 auf, der mit Laufspiel im kreiszylindrischen Abschnitt 6 gleiten kann. Der Schieber 18 weist ferner einen konischen Bereich 22 auf, dessen in Fig. 1 nach unten sich verjüngende Kegelfläche sich mit den Dichtflächen 14 der Ventilsitze 12 geometrisch in Deckung bringen lässt.

Die Zentralbohrung 4 ist durch einen Deckel 24 mit einer als Stopfüchse ausgebildeten Schiebedichtung 26 für die Ventilspindel 16 verschlossen. Die Stopfbüchse 26 stützt sich auf einer Innenschulter 28 ab. Die die Schulter 28 begrenzende Bohrung 27 für die Ventilspindel 16 weist an ihrem inneren Ende eine konische Sitzfläche 32 auf, die von einer Hartmetallauflage gebildet wird. Zusammen mit einer entsprechenden Konusfläche 34 am Uebergang von der Ventilspindel 16 zum Abschnitt 20 des Schiebers 18 bilden die Flächen 32 und 34 eine Rücksitzdichtung, wenn der Schieber sich in voll offener Position befindet.

Das Abschlussventil ist normalerweise in offener Stellung, wobei die der Stopfbüchse 26 vorgeschaltete Rücksitzdichtung eine Primärabdichtung bildet. Wird das Ventil geschlossen - beispielsweise mittels eines auf die Ventilspindel 16 wirkenden Handantriebes - so wird der konische Bereich 22 des Schiebers 18 kräftig auf die beiden Dicht-

0088144

flächen 14 gedrückt, sodass die Verbindung von der Anschlussöffnung 2 zur Zentralbohrung 4 und jene von der
Zentralbohrung 4 zur Anschlussöffnung 3 dicht verschlossen
sind. Beim Bewegen des Schiebers 18 strömt - ohne merkliche
Druckerhöhung - das vom Schieber 18 verdrängte Medium in
der einen oder der anderen Richtung durch die Schrägnut 21.

Bei der Fertigung des Ventils werden die Ventilsitze 12
nach dem Einlöten in die zugehörige Ausdrehung 10 mittels
durch die Zentralbohrung 4 eingeführter Schleifwerkzeuge
in die verlangte exakte Konusform geschliffen. Die geschliffene Konusfläche wird gegebenenfalls anschliessend
mit Hilfe eines konischen Gussdorns geläppt. Der konische
Bereich 22 des Schiebers 18 wird auf einer Schleifmaschine
geschliffen und gegebenenfalls hernach in einer konischen
Gussbüchse geläppt. Schliesslich werden die mit 14 und 22
bezeichneten konischen Oberflächen leicht aufeinander eingeschliffen. Dieses Einschleifen ist wegen der konischen
Oberflächen bedeutend einfacher und schneller durchführbar
als bei den bekannten Absperrschiebern mit planen Dichtungsflächen.

Das Ausführungsbeispiel nach Fig. 2 unterscheidet sich von
jenem nach Fig. 1 dadurch, dass das Gehäuse 1 einen tieferen Abschnitt 8 aufweist und der Schieber 18 unterhalb des
konischen Bereiches 22 einen Zapfen 40 mit einem Durchgangsloch 42 aufweist. Dieses Loch 42 ist so gebohrt, dass
in offenem Zustand des Ventils im Bereich des Zapfens eine
geradlinige Verbindung zwischen den Anschlussöffnungen 2
und 3 besteht. Da in dieser Position die Wand des Loches 42
das strömende Medium führt, ergeben sich geringere Turbulenzen und entsprechend geringere Druckverluste als bei der
Ausführungsform nach Fig. 1. Um sicherzustellen, dass sich
die Achse der Bohrung 42 gegenüber den Achsen der Anschlussöffnungen 2 und 3 nicht verdreht, weist der kreiszylindrische Abschnitt 6 der Zentralbohrung 4 eine Längsnut 44 auf,

0088144

in die ein am Abschnitt 20 des Schiebers 18 angebrachter, radialer Stift 46 eingreift.

Patentansprüche

1. Abschlussventil mit zwei an einem Ventilgehäuse (1) einander gegenüber angeordneten Anschlussöffnungen (2,3) und mit zwei diesen Anschlussöffnungen (2,3) zugeordneten Sitzflächen (14) im Innern des Ventilgehäuses sowie mit einem im Ventilgehäuse (1) befindlichen, quer zu den Achsen der Anschlussöffnungen (2,3) verschiebbaren, mit den beiden Sitzflächen (14) zusammenwirkenden Schieber (18), der mit einer Ventilspindel (16) verbunden ist, die einen mit einer Schiebedichtung (26) versehenen Deckel (24) des Ventilgehäuses (1) durchdringt, dadurch g e k e n n z e i c h n e t, dass der mit den Sitzflächen (14) im Ventilgehäuse (1) zusammenwirkende Bereich (22) des Schiebers (18) konisch ausgebildet ist und dass auch die Sitzflächen (14) im Ventilgehäuse (1) nach einer Konusfläche verlaufen, die durch den konischen Bereich (22) des Schiebers (18) deckbar ist.

2. Ventil nach Anspruch 1, dadurch gekennzeichnet, dass am dickeren Ende des konischen Bereiches (22) des Schiebers (18) ein kreiszylindrischer Abschnitt (20) anschliesst, der gleich dick oder höchstens 10% dicker ist als das dickere Ende des konischen Bereiches (22), dass das Ventilgehäuse (1) einen kreiszylindrischen, als Gleitfläche ausgebildeten Abschnitt (6) zur Führung des kreiszylindrischen Abschnittes (20) aufweist und dass der als Gleitfläche ausgebildete Abschnitt (6) nahe dem Gehäusedeckel (24) endet.

3. Ventil nach Anspruch 2, dadurch gekennzeichnet, dass am kreiszylindrischen Abschnitt (20) des Schiebers (18) eine Dichtfläche (34) vorgesehen ist, die mit einer im Gehäusedeckel (24) angeordneten Gegenfläche (32) eine Rücksitzdichtung bildet.

4. Ventil nach einem der Ansprüche 1 bis 3, dadurch gekennzeichnet, dass der Schieber (18) am dünneren Ende seines konischen Bereiches (22) einen zur Ventilspindel (16) koaxialen, zylindrischen Zapfen (40) mit einem Durchgangsloch (42) aufweist und dass die Grösse und die Richtung dieses Durchgangsloches (42) so gewählt sind, dass bei geöffnetem Schieber (18) die Achse des Durchgangsloches (42) mit den Achsen der beiden Anschlussöffnungen (2,3) fluchtet, und dass Mittel (44,46) vorhanden sind, die ein Verdrehen des Schiebers (18) um seine Längsachse verhindern.

0088144

Fig. 2

Fig. 1

## EINSCHLÄGIGE DOKUMENTE

EP 82102761.2

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| X | DE - A - 2 305 668 (WHITEY RE-SEARCH TOOL CO.) <br> * Gesamt * <br> -- | 1,2 | F 16 K 1/38 <br> F 16 K 3/12 |
| X | US - A - 3 778 030 (B. CARLIN) <br> * Fig. 1 * <br> -- | 1,2 | |
| A | US - A - 2 564 168 (H.C. MEADOR et al.) <br> * Fig. 2 * <br> -- | 1,2 | |
| A | US - A - 3 443 789 (C.O. GLASGOW et al.) <br> * Fig. 2 * <br> -- | 1,2 | |
| A | US - A - 3 544 064 (B. CARLIN) <br> * Fig. 1 * <br> ---- | 1 | |

**RECHERCHIERTE SACHGEBIETE (Int. Cl. ³)**

F 16 K 1/00
F 16 K 3/00

Der vorliegende Recherchenbericht wurde für alle Patentansprüche erstellt.

| Recherchenort | Abschlußdatum der Recherche | Prüfer |
|---|---|---|
| WIEN | 22-06-1983 | ROUSSARIAN |